# EUROPÄISCHE PATENTSCHRIFT

(11) **EP 1 404 536 B1**
(45) Veröffentlichungstag und Bekanntmachung des Hinweises auf die Patenterteilung: **12.10.2005**
(21) Anmeldenummer: 02745353.9
(22) Anmeldetag: 04.06.2002
(51) Int. Cl.: B60G 3/20, B60G 3/26

(54) **HINTERACHSE EINES PERSONENKRAFTWAGENS MIT FÜNF EINZELNEN LENKERN**
REAR AXLE OF A PASSENGER VEHICLE WITH FIVE INDIVIDUAL LINKS
ESSIEU ARRIERE D'UN VEHICULE AUTOMOBILE DOTE DE CINQ BRAS OSCILLANTS

(30) Priorität: 10.07.2001 DE 10133424
(43) Veröffentlichungstag der Anmeldung: 07.04.2004
(73) Patentinhaber: Bayerische Motoren Werke Aktiengesellschaft, 80809 München (DE)
(72) Erfinder: EPPELEIN, Ralph, 85375 Neufahrn (DE)
(86) Internationale Anmeldenummer: PCT/EP2002/006076
(87) Internationale Veröffentlichungsnummer: WO 2003/008212

(56) Entgegenhaltungen:
- EP-A- 1 123 821
- US-A- 4 444 415
- US-A- 4 878 688
- US-A- 4 930 804
- US-A- 5 116 076
- US-A- 5 507 510

## Beschreibung

Die Erfindung betrifft eine Hinterachse eines Fahrzeugs, insbesondere eines Personenkraftwagens, deren Radträger durch fünf einzelne Lenker geführt ist, von denen zwei oberhalb des Radmittelpunktes und zumindest zwei im wesentlichen unterhalb des Radmittelpunktes angelenkt sind, und wobei die sog. Spurstange in Fahrtrichtung betrachtet hinter dem Radmittelpunkt oberhalb oder unterhalb desselben angelenkt ist. Zum technischen Umfeld wird auf die DE 44 08 571 A1 verwiesen. Zudem zeigt die US 4 444 415 A eine dem Anspruch 1 ähnliche Hinterachse, wobei aber die Spurstange vor dem Radmittelpunkt angeordnet ist.

Die sog. Fünf-Lenker-Achsen zeichnen sich prinzipiell durch optimale Gestaltungsfreiheit insbesondere hinsichtlich der kinematischen Verhältnisse unter besonderer Berücksichtigung der Elastokinematik aus. Probleme bereiten kann jedoch das sog. Bauraum-Management, d.h. wie der zur Verfügung stehende Bauraum unter Berücksichtigung aller möglichen Relativbewegungen zwischen den einzelnen Bauteilen bestmöglich genutzt wird, ohne als Folge dieser Lenker-Bewegungen unerwünschte Fahrverhaltens-Reaktionen in Kauf nehmen zu müssen.

Hiermit soll nun eine Hinterachse nach dem Oberbegriff des Anspruchs 1 aufgezeigt werden, die sich durch eine besonders günstige Bauraum-Nutzung auszeichnet (= Aufgabe der vorliegenden Erfindung).

Die Lösung dieser Aufgabe ist dadurch gekennzeichnet, dass die beiden oberen Querlenker in Fahrtrichtung betrachtet vor einem Federelement und/oder Dämpferelement liegen, welches zwischen dem Fahrzeug-Aufbau und einem der unteren Lenker angeordnet ist. Vorteilhafte Aus- und Weiterbildungen sind Inhalt der Unteransprüche.

Mit der angegebenen Anordnung der beiden oberen Querlenker, die beide in Fzg.-Fahrtrichtung betrachtet vor einem Federelement und/oder einem Dämpferelement, über welches sich der Fzg.-Aufbau auf der Hinterachse abstützt, liegen, lassen sich diese beiden Lenker relativ kurz bauend gestalten. Damit sind die Schwenkbewegungen, die diese oberen Lenker beim Ein- und Ausfedern des Aufbaus gegenüber der Achse ausführen, relativ gering, so dass die Möglichkeit einer Kollision eines dieser Lenker mit einem in diesem Bereich üblicherweise vorhandenen Karosserie-Längsträger deutlich reduziert wird. So ist es eine im wesentlichen geradlinige oder allenfalls geringfügig gekröpfte Lenkergestaltung möglich, womit sich eine höhere Steifigkeit als bei einem stark gekröpften Lenker ergibt. Ein steiferer Lenker kann dann vorteilhafterweise über einfache, zuverlässige Gummilager gelagert werden und benötigt keine aufwendige bspw. Kugelkopf-Lagerung. Trotz optimal - hinsichtlich Steifigkeitsanforderungen - ausgelegtem Karosserie-Längsträger können die erfindungsgemäß angeordneten oberen Querlenker somit unter Erzielung auch kinematischer Vorteile absolut geradlinig gestreckt ausgeführt sein.

Bezüglich der in Fzg.-Fahrtrichtung hinter (sowie unterhalb oder oberhalb) dem/des Rad-Mittelpunkt(es) am Radträger angelenkten Spurstange, die einen der drei unteren Lenker darstellt, sei darauf hingewiesen, dass durch diese Anordnung die Spurstange relativ lang bauend ausgebildet werden kann, woraus sich vorteilhafterweise eine geringere Toleranz-Empfindlichkeit ergibt. Im entsprechenden Gelenk (insbesondere zwischen Spurstange und Radträger) ist daher eine geringere Kardanik und Torsion aufzunehmen, was auch hier die Verwendung von einfachen Gummilagern (anstelle von Kugelgelenken) erlaubt. Im übrigen lässt sich mit einer derartigen Spurstangen-Anordnung auf relativ einfache Weise einer Hinterrad-Lenkung realisieren.

Verläuft die Spurstange in einer zur Fahrbahn parallelen Ebene gegenüber der Fzg.-Querrichtung angestellt, d.h. liegt in einer Draufsicht auf die Hinterachse ein Pfeilungswinkel der Spurstange vor, so wird eine geometrische Lage der wirksamen Spreizachse ermöglicht, die sowohl im Antriebsfall, wenn die Kräfte zwischen Rad und Fahrbahn am Radmittelpunkt angreifen, als auch im Bremsfall, wenn diese Kräfte im Radaufstandspunkt wirken, eine elastokinematische Vorspuränderung bewirkt, die eine neutrale bzw. stabilisierende Wirkung auf das Gesamtfahrzeug hat. Insbesondere gilt dies, wenn entweder der sog. Triebkrafthebelarm oder der sog. Bremskrafthebelarm betragsmäßig klein ist und diese beiden Hebelarme betragsmäßig unterschiedlich sind. In anderen Worten ausgedrückt heißt dies, dass die Spreizachse der Radaufhängung entweder nahezu durch den Radmittelpunkt oder nahezu durch den Mittelpunkt der Radaufstandsfläche verläuft, d.h. einem dieser genannten Mittelpunkte sehr nahe ist oder einen dieser genannten Mittelpunkte sogar durchdringt. Bevorzugt kann dabei der sog. Pfeilungswinkel der Spurstange in der Größenordnung von 3° bis 25° liegen.

Mit den Merkmalen des Anspruchs 3, nämlich dass die radträgerseitigen Anlenkpunkte der beiden oberen Lenker und/oder der unteren Lenker gegeneinander höhenversetzt sind, ist abermals ein Bauraum-Gewinn erzielbar, da keine Kollision zwischen den Verschraubungselementen oder dgl. zwischen einander benachbarten Lenkern und dem Radträger erfolgt. Insbesondere ist es damit möglich, die beiden oberen Querlenker sowie den unteren Querlenker und den (unteren) Längslenker besonders nahe nebeneinander am Radträger anzulenken, was insbesondere für die Lage der wirksamen Spreizachse wichtig bzw. von Vorteil ist. Günstige kinematische Verhältnisse können dabei eingestellt werden, wenn weder die beiden oberen Lenker noch der untere Querlenker und der (untere) Längslenker eine jeweils gemeinsame Ebene beschreiben.

In Anspruch 5 ist eine hinsichtlich der Fertigung und Montage vorteilhafte Gestaltung der Spurstange angegeben. Zumeist werden Lenker auf sog. zweischnittige Weise endseitig angelenkt, d.h. eine Befestigungslasche oder dgl., die am Radträger oder am Fzg.-Aufbau bzw. einem sog. Fahrschemel oder Achsträger vorgesehen ist, liegt an den beiden einander gegenüberliegenden Seiten des Lenker-Auges oder dgl. an. Insbesondere mit einer relativ lange ausgebildeten und dabei wie vorgeschlagen gepfeilt angeordneten Spurstange ist (auch aufgrund der bereits erwähnten Toleranz-Unempfindlichkeit) auch am Fahrschemel oder Achsträger eine sog. einschnittige Anlenkung möglich, die vorteilhafterweise eine kurze Baulänge dieses Fahrschemels oder Achsträgers ermöglicht. Bevorzugt ist diese einschnittige Anbindung oder Verschraubung am Fahrschemel dabei derart gestaltet, dass dort eine strukturversteifende Verbindung (bspw. in Form einer angeschweißten Distanzbuchse) zwischen einander benachbarten Wänden eines Trägerteils des Fahrschemels vorgesehen ist, durch welche ein Bolzen- oder Schraubenelement der einschnittigen Anbindung hindurchgeführt ist. Auf diese Weise kann die gesamte Biegesteifigkeit des an dieser Stelle zur Verfügung stehenden Trägerteil- bzw. Fahrschemel-Querschnitts für die einschnittige Lenker-Anbindung genutzt werden.

Wie grundsätzlich bekant, können sämtliche Lenker einer erfindungsgemäßen Hinterachse direkt oder indirekt letztlich an einem einen Tragrahmen bildenden Hinterachsträger angebunden sein, wodurch insbesondere die Montage der gesamten Achseinheit vereinfacht wird. Dies sowie weitere vorteilhafte Merkmale geht auch aus der folgenden Beschreibung eines bevorzugten Ausführungsbeispiels hervor, von dem in der beigefügten **Figur** **1** eine räumliche Ansicht dargestellt ist, während **Figur 2** eine Draufsicht und **Figur 3** eine Ansicht von hinten jeweils auf die in Fahrtrichtung betrachtet linke Hälfte einer erfindungsgemäßen PKW-Hinterachse zeigt. **Figur 4** zeigt ferner eine Seitenansicht. Erfindungswesentlich können dabei sämtliche näher beschriebenen Merkmale sein.

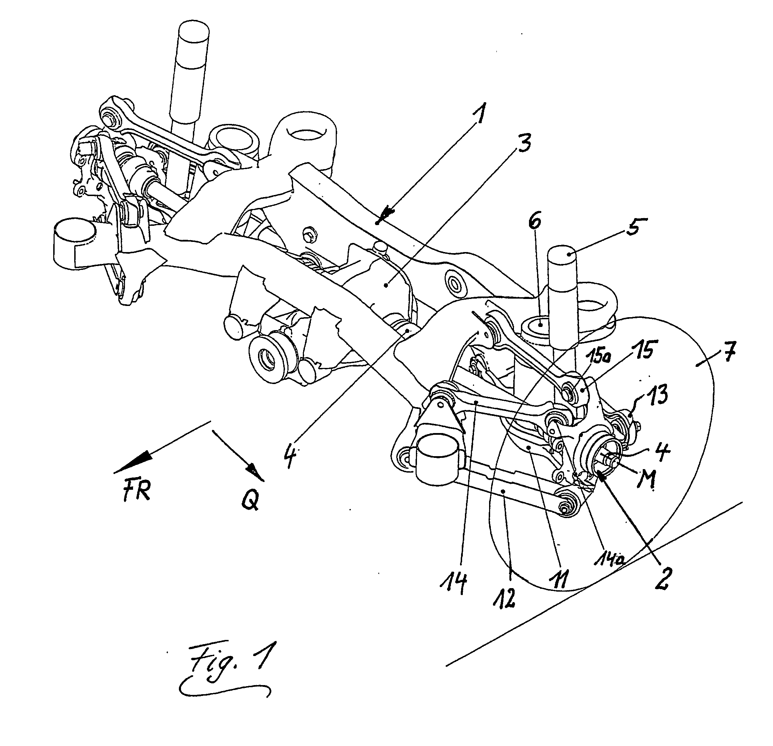

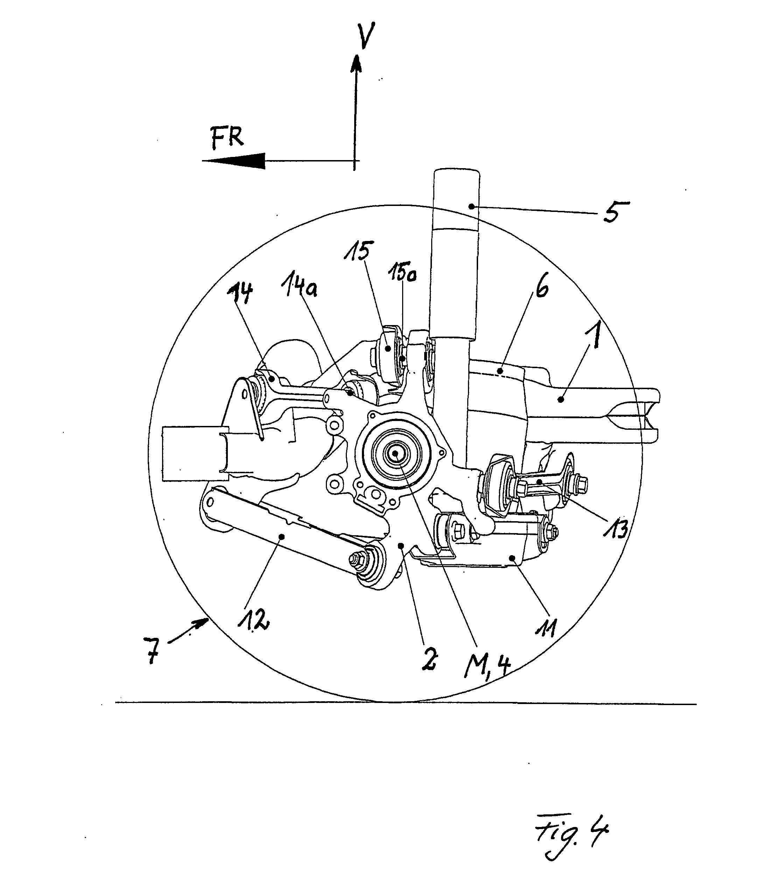

Mit der Bezugsziffer 1 ist ein sog. Hinterachsträger oder Fahrschemel bezeichnet, der im wesentlichen über vier Befestigungsstellen mit dem nicht dargestellten Fzg.-Aufbau verbunden ist. Zwei beidseitig des Hinterachsträgers 1 vorgesehene Radträger 2 (in sämtlichen Figuren ist lediglich der in Fahrtrichtung FR linksseitige Radträger 2 dargestellt) sind über jeweils fünf Lenker 11, 12, 13, 14, 15 gelenkig am Hinterachsträger 1 aufgehängt. Ferner erkennt man ein im Hinterachsträger 1 zentral aufgehängtes Hinterachsgetriebe 3 mit integriertem Differential, von dem jeweils eine Abtriebswelle 4 zu den an den Radträgern 2 vorgesehenen, nicht detailliert dargestellten Naben für die (in den Figuren 1 und 4 lediglich abstrakt dargestellten) Fzg.-Hinterräder 7 führen.

Neben den bereits genannten Elementen erkennt man beidseitig jeweils ein Federelement 6 sowie einen neben diesem angeordneten Dämpfer 5, über die der (nicht dargestellte) Fzg. Aufbau im wesentlichen in Vertikalrichtung auf der Hinterachse, genauer auf einem der unteren Quer-Lenker, nämlich dem sog. Feder-Dämpfer-Lenker 11 abgestützt ist. In diesem Zusammenhang sei darauf hingewiesen, dass die Fzg.-Querrichtung durch den Pfeil Q dargestellt ist, während die Fzg.-Längsrichtung gleich der Fzg.-Fahrtrichtung, die durch den Pfeil FR dargestellt ist, ist.

Neben dem (unteren) Feder-Dämpfer-Lenker 11 ist ein weiterer Lenker 12 unterhalb des Rad-Mittelpunktes M (bzw. der horizontal verlaufenden Rad-Mittelpunktslinie M) am Radträger 2 angelenkt, der als Längslenker 12 bezeichnet wird, wenngleich sich dieser Längs-Lenker 12 auch in Fzg.-Querrichtung Q erstreckt. Schließlich ist ein dritter Lenker 13 hier ebenfalls unterhalb des Rad-Mittelpunktes M am Radträger 2 angelenkt, und zwar die sog. Spurstange 13. (Alternativ kann sich diese Spurstange 13 jedoch auch in der Höhe des Rad-Mittelpunktes M oder oberhalb desselben befinden).

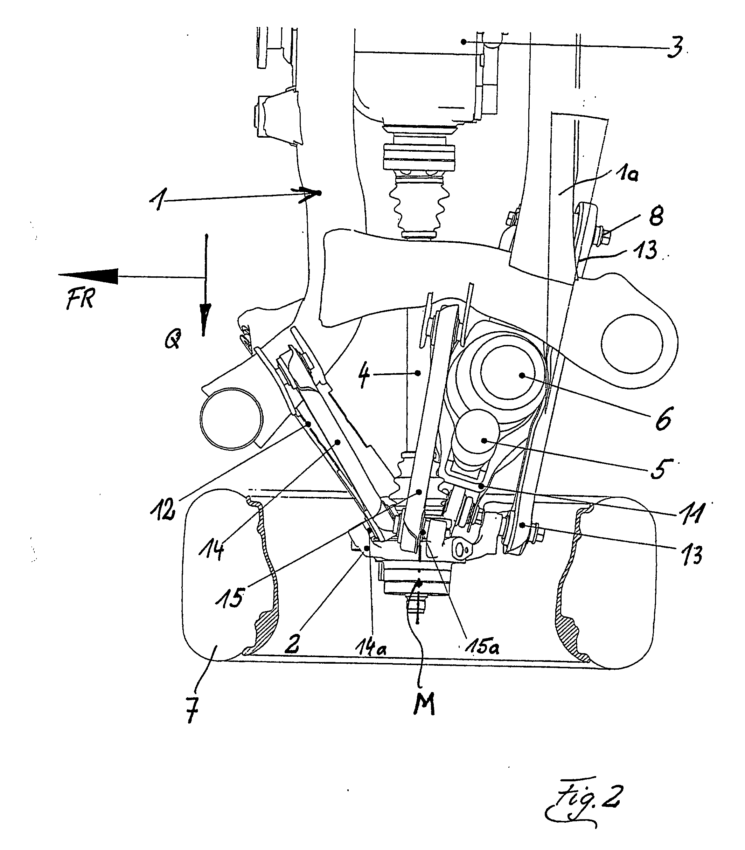

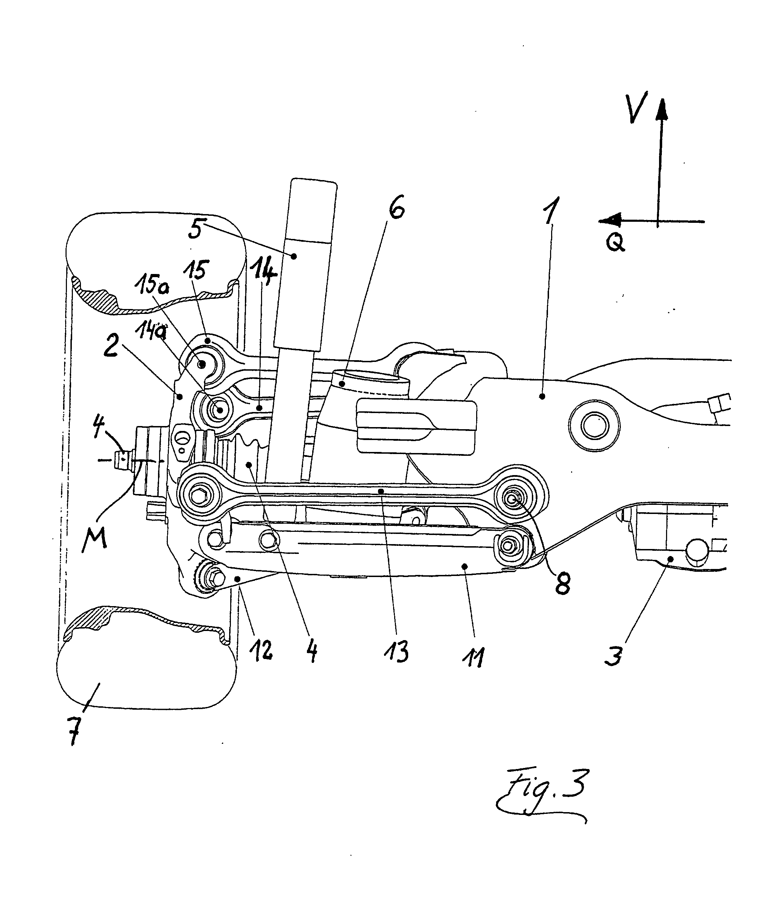

Neben diesen bislang genannten am Radträger 2 angebundenen Lenkern 11, 12, 13 sind noch zwei oberhalb des Rad-Mittelpunktes M am Radträger 2 angebundene Lenker 14, 15 vorgesehen. Diese beiden Lenker verlaufen in Fahrtrichtung FR betrachtet vor dem Federelement 6 sowie dem Dämpfer 5, mit den weiter oben genannten Vorteilen. In Vertikalrichtung V (vgl. Ansicht von hinten, **Fig.3**) liegen die Anlenkpunkte 14a, 15a dieser oberen Quer-Lenker 14, 15 übereinander, und gleiches gilt auch für deren nicht separat bezeichneten Anlenkpunkte am Hinterachsträger 1, nachdem die beiden oberen Quer-Lenker 14, 15 in der Vertikalebene (entspricht der Zeichenebene von **Fig.3**) betrachtet im wesentlichen parallel zueinander verlaufen. Da sie jedoch in der Horizontalebene betrachtet (vgl. **Fig.2**) nicht parallel zueinander sind, beschreiben diese beiden oberen Lenker 14, 15 keine gemeinsame Ebene.

Gleiches gilt für die beiden unteren Lenker 11, 12, nämlich den Feder-Dämpfer-Lenker 11 sowie den Längslenker 12. Auch die Spurstange 13, die zur Erzielung der oben beschriebenen Vorteile wie gezeigt (und dabei insbesondere unter einem Pfeilungswinkel ϕ in der Größenordnung von 10°) angeordnet ist, liegt wie weiter oben ausführlich beschrieben. Dabei ist die Spurstange 13 wie ersichtlich einschnittig sowohl am Radträger 2 als auch am Hinterachsträger 1 angelenkt, und zwar konkret an einem Querträger 1a desselben, wie am besten aus den **Figuren 2, 3** hervorgeht. Hierin erkennt man eine Bolzenschraube 8, die ein im Spurstangen-Auge vorgesehenes Gummilager sowie die Rückwand und Vorderwand des bspw. als Hohlprofil oder U-Profil ausgebildeten Querträgers 1a durchdringt, wobei in diesem Bereich zwischen der Querträger-Vorderwand und -Rückwand eine (figürlich nicht dargestellte) Distanzbuchse eingeschweißt sein kann, längs deren Achse die Bolzenschraube 8 verläuft, und die diese einschnittige Anlenkung vorteilhaft versteift.

Die beschriebene Hinterachse zeichnet sich durch einen äußerst kompakten Aufbau mit den oben beschriebenen Vorteilen aus, wobei noch darauf hingewiesen sei, dass durchaus eine Vielzahl von Details insbesondere konstruktiver Art abweichend vom gezeigten Ausführungsbeispiel gestaltet sein kann, ohne den Inhalt der Patentansprüche zu verlassen.

## Patentansprüche

1. Hinterachse eines Fahrzeugs, insbesondere eines Personenkraftwagens, deren Radträger (2) durch fünf einzelne Lenker (11, 12, 13, 14, 15) geführt ist, von denen zumindest zwei (14, 15) oberhalb des Radmittelpunktes (M) und zumindest zwei (11, 12) im wesentlichen unterhalb des Radmittelpunktes (M) angelenkt sind, und wobei die sog. Spurstange (13) in Fahrtrichtung (FR) betrachtet hinter dem Radmittelpunkt (M) oberhalb oder unterhalb desselben angelenkt ist,
**dadurch gekennzeichnet, dass** die beiden oberen Querlenker (14, 15) in Fahrtrichtung (FR) betrachtet vor einem Federelement (6) und/oder Dämpferelement (7) liegen, welches zwischen dem Fahrzeug-Aufbau und einem der unteren Lenker (11, 12) angeordnet ist.

2. Hinterachse nach Anspruch 1,
**dadurch gekennzeichnet, dass** die Spurstange (13) gegenüber der Fzg.-Querrichtung (Q) um einen sog. Pfeilungswinkel (ϕ) in der Größenordnung von 3° bis 25° angestellt ist.

3. Hinterachse nach Anspruch 1 oder 2,
**dadurch gekennzeichnet, dass** die radträgerseitigen Anlenkpunkte (14a, 15a) der beiden oberen Lenker (14, 15) und/oder der unteren Lenker (11, 12, 13) gegeneinander höhenversetzt sind.

4. Hinterachse nach einem der vorangegangenen Ansprüche,
**dadurch gekennzeichnet, dass** weder die beiden oberen Lenker (14, 15) noch der untere Querlenker (11) und der (untere) Längslenker (12) eine jeweils gemeinsame Ebene beschreiben.

5. Hinterachse nach einem der vorangegangenen Ansprüche,
**dadurch gekennzeichnet, dass** die Spurstange (13) zumindest an einem Ende einschnittig angelenkt ist.

6. Hinterachse nach einem der vorangegangenen Ansprüche,
**dadurch gekennzeichnet, dass** die sämtliche Lenker (11 - 15) direkt oder indirekt letztlich an einem einen Tragrahmen bildenden Hinterachsträger (1) angebunden sind.

## Claims

1. A rear axle for a motor vehicle, especially a passenger car, comprising a wheel carrier (2) guided by five individual links (11, 12, 13, 14, 15), at least two (14, 15) of which are connected above the wheel centre (M) and at least two (11, 12) are connected substantially under the wheel centre (M), and wherein the so-called track rod (13), considered in the direction of travel (FR), is connected behind and above or below the wheel centre (M),
**characterised in that** the two top transverse links (14, 15), considered in the direction of travel (FR), are situated in front of a spring element (6) and/or a shock-absorbing element (7) disposed between the vehicle body and one of the bottom links (11, 12).

2. A rear axle according to claim 1, **characterised in that** the track rod (13) is positioned at a so-called sweep angle (ϕ) of the order of 3° to 25° relative to the transverse direction (Q) of the vehicle.

3. A rear axle according to claim 1 or 2, **characterised in that** the places (14a, 15a) where the two top links (14, 15) and/or the bottom links (11, 12, 13) are connected to the wheel carrier are vertically offset from one another.

4. A rear axle according to any of the preceding claims, **characterised in that** neither the two top links (14, 15) nor the bottom link (11) and the (bottom) longitudinal link (12) describe a common plane.

5. A rear axle according to any of the preceding claims, **characterised in that** the track rod (13) is connected in single shear at at least one end.

6. A rear axle according to any of the preceding claims, **characterised in that** all the links (11 - 15) are directly or indirectly connected, basically to a supporting frame in the form of a rear-axle carrier (1).

## Revendications

1. Essieu arrière d'un véhicule automobile, notamment d'un véhicule de tourisme, dont le support de roue (2) est guidé par cinq bras individuels (11, 12, 13, 14, 15) dont au moins deux (14, 15) sont articulés au-dessus du centre de la roue (M) et au moins deux autres (11, 12) sont articulés essentiellement en dessous de ce point (M), avec la barre d'accouplement (13) qui, quand on l'observe selon la direction de déplacement du véhicule (FR), est articulée derrière ce centre (M), au-dessus ou en dessous de celui-ci,
**caractérisé en ce que**
les deux bras transversaux supérieurs (14, 15), observés selon la direction de déplacement (FR), se trouvent devant un élément de ressort (6) et/ou un élément d'amortisseur (7) disposé entre la structure du véhicule et un des bras inférieurs (11, 12).

2. Essieu arrière selon la revendication 1,
**caractérisé en ce que**
la barre d'accouplement (13) fait, avec la direction transversale (Q) du véhicule, un angle de flèche (ϕ) d'un ordre de grandeur allant de 3° à 35°.

3. Essieu arrière selon la revendication 1 ou 2,
**caractérisé en ce que**
les points d'articulation (14a, 15a) situés du côté du support de roue des deux bras supérieurs (14, 15) et/ou des bras inférieurs (11, 12, 13) sont décalés en hauteur entre eux.

4. Essieu arrière selon les revendications précédentes,
**caractérisé en ce que**
ni les deux bras supérieurs (14, 15), ni le bras transversal inférieur (11) et le bras longitudinal inférieur (12) ne se déplacent dans un plan commun.

5. Essieu arrière selon une des revendications précédentes,
**caractérisé en ce que**
la barre d'accouplement (13) présente une articulation à simple section à au moins une de ses extrémités.

6. Essieu arrière selon une des revendications précédentes,
**caractérisé en ce que**
tous les bras (11 - 15) sont finalement reliés directement ou indirectement à un support d'essieu arrière (1) constituant un cadre porteur.
